# EUROPÄISCHE PATENTSCHRIFT

(11) **EP 0 406 168 B1**
(45) Veröffentlichungstag und Bekanntmachung des Hinweises auf die Patenterteilung: **27.04.1994**
(21) Anmeldenummer: 90810462.3
(22) Anmeldetag: 21.06.1990
(51) Int. Cl.: C08G 65/26, C08G 65/32

(54) **Phenylalkylglycidether-Anlagerungsprodukte**
Addition products of phenylalkylglycid ethers
Produits d'addition d'éthers de phénylalkylglycidyle

(30) Priorität: 30.06.1989 CH 2436/89
(43) Veröffentlichungstag der Anmeldung: 02.01.1991
(73) Patentinhaber: CIBA-GEIGY AG, 4002 Basel (CH)
(72) Erfinder: Reinehr, Dieter, Dr., D-7842 Kandern (DE); Töpfl, Rosemarie, CH-4143 Dornach (CH)

(56) Entgegenhaltungen:
- EP-A- 0 197 001
- EP-A- 0 256 658

## Beschreibung

Die vorliegende Erfindung betrifft neue Phenylalkylglycidetheranlagerungsprodukte sowie ihre Verwendung als Textilveredlungsmittel, insbesondere als Emulgiermittel, Netzmittel, Schaumdämpfungsmittel oder Färbereihilfsmittel.

Die EP-A-197001 betrifft ebenfalls Textilhilfsmittel und offenbart Polyalkylenglykolether aus Ethyleneoxid/Propylenoxid gestartet auf langkettigem Monoalkohol sowie deren saure Ester.

Die erfindungsgemässen Phenylalkylglycidetheranlagerungsprodukte sind dadurch gekennzeichnet, dass sie Anlagerungsprodukte von Phenylalkylglycidether an Polyalkylenglykolether der Formel
(₁) R-O-(Alkylen-O-)ₘ- H und ihre sauren Ester und deren Salze darstellen, wie in Anspruch 1 definiert.

Die Phenylalkylglycidether sind Benzylglycidether und Phenethylglycidether.

In Formel (1) bedeutet R einen aliphatischen Rest mit mindestens 4 Kohlenstoffatomen. "Alkylen" steht für einen Alkylenrest von 2 oder 3 Kohlenstoffatomen wie Ethylen oder Propylen oder deren Kombinationen. m bedeutet eine Zahl von 2 bis 100, vorzugsweise 4 bis 80.

Der Substituent R stellt vorteilhafterweise den Kohlenwasserstoffrest eines ungesättigten oder gesättigten aliphatischen Monoalkohols mit 4 bis 24 Kohlenstoffatomen dar. Der Kohlenwasserstoffrest kann geradkettig oder verzweigt sein. Vorzugsweise bedeutet R einen Alkyl- oder Alkenylrest mit 8 bis 22 Kohlenstoffatomen.

Als aliphatische gesättigte Monoalkohole können natürliche Alkohole, wie z.B. Laurylalkohol, Myristylakohol, Cetylalkohol, Stearylalkohol, Arachidylalkohol oder Behenylalkohol, sowie synthetische Alkohole, z.B. Oxo-Alkohole wie insbesondere Butanol, Amylalkohol, 2-Ethylbutanol, 2-Methylpentanol, 5-Methylheptan-3-ol, 2-Ethyl-hexanol, 1,1,3,3-Tetramethylbutanol, Octan-2-ol, Isononylalkohol, Trimethylhexanol, Trimethylnonylalkohol, Decanol, Cg-C₁,-Oxoalkohol, Tridecylalkohol, Isotridecanol oder lineare primäre Alkohole (Alfole) mit 8 bis 18 Kohlenstoffatomen in Betracht kommen. Einige Vertreter der Alfole sind Alfol (8-10), Alfol (9-11), Alfol (10-14), Alfol (12-13) oder Alfol (16-18), ("Alfol" ist ein eingetragenes Warenzeichen).

Ungesättigte aliphatische Monoalkohole sind beispielsweise Dodecenylalkohol, Hexadecenylalkohol oder Oleylalkohol.

Die Alkoholreste können einzeln oder in Form von Gemischen von zwei oder mehreren Komponenten vorhanden sein, wie z.B. Mischungen von Alkyl- und/oder Alkenylgruppen, die sich von Soja-Fettsäuren, Palmkernfettsäuren oder Talg-Oelen ableiten.

(Alkylen-O)m-Ketten sind bevorzugt vom Ethylenglykol-, Propylenethylenglykol- oder Ethylenpropylenglykol-Typus; besonders bevorzugt ist ersterer.

m ist bevorzugt 4 bis 40.

Die Phenylalkylglycidetheranlagerungsprodukte werden hergestellt, indem man zuerst den aliphatischen Monoalkohol mit 2 bis 100 Mol Alkylenoxid (Ethylenoxid und/oder Propylenoxid) verethert und dann 1 Mol Phenylalkylglycidetheran den erhaltenen Polyalkylenglykoletheranlagert. Die Veretherung des Monoalkohols wird nach an sich bekannten Methoden durchgeführt, wobei Ethylenoxid oder Propylenoxid oder abwechselnd Ethylenoxid und Propylenoxid oder Mischungen von Ethylenoxid und Propylenoxid verwendet werden. Die Phenylalkylglycidetheranlagerung erfolgt zweckmässigerweise in einem praktisch wasserfreien oder wasserarmen Medium bei einer Temperatur von 40 bis 90°C mit oder ohne Druck und in Gegenwart eines sauren oder basischen Katalysators. Als saure Katalysatoren kommen Phosphorsäure, Schwefelsäure oder vor allem Bortrifluoridetherat in Betracht. Die Säure wird dann durch Neutralisieren und Filtrieren entfernt. Als basische Katalysatoren werden Alkalimetallhydroxide, z.B. Natrium- oder Kaliumhydroxid oder Natriumethylat eingesetzt.

Als Beispiele für die zur Phenylalkylglycidetheranlagerung benötigten Polyalkylenglykolether, die der Formel (1) entsprechen, seien im einzelnen genannt
- Anlagerungsprodukt von 2,5 Mol Ethylenoxid an 1 Mol Cg-C₁,-Oxoalkohol
- Anlagerungsprodukt von 4 Mol Ethylenoxid an 1 Mol Cg-C₁,-Oxoalkohol
- Anlagerungsprodukt von 5 Mol Ethylenoxid an 1 Mol Cg-C₁,-Oxoalkohol
- Anlagerungsprodukt von 35 Mol Ethylenoxid an 1 Mol Stearylalkohol
- Anlagerungsprodukt von 36 Mol Ethylenoxid an 1 Mol Stearylalkohol
- Anlagerungsprodukt von 18 Mol Ethylenoxid an 1 Mol C₁₂-C₁₈-Fettalkoholgemisch (Cetalol 50-55)
- Anlagerungsprodukt von 10 Mol Ethylenoxid an 1 Mol 2-Ethylhexanol
- Anlagerungsprodukt von 4 Mol Ethylenoxid und 12 Mol Propylenoxid an 1 Mol C₉-C₁₁-Oxoalkohol
- Anlagerungsprodukt von 8 Mol Ethylenoxid und 12 Mol Propylenoxid an 1 Mol C12-C13-Fettalkohol
- Anlagerungsprodukt von 6 Mol Ethylenoxid und 6 Mol Propylenoxid an 1 Mol C₉-C₁₁-Oxoalkohol
- Anlagerungsprodukt von 18 Mol Ethylenoxid an 1 Mol Cetylalkohol
- Anlagerungsprodukt von 3 Mol Ethylenoxid an 1 Mol Isotridecylalkohol
- Anlagerungsprodukt von 9 Mol Ethylenoxid an 1 Mol Tridecylalkohol
- Anlagerungsprodukt von 80 Mol Ethylenoxid an 1 Mol Oleylalkohol
- Anlagerungsprodukt von 10 Mol Ethylenoxid an 1 Mol Tridecylalkohol
- Anlagerungsprodukt von 20 Mol Ethylenoxid an 1 Mol Oleylalkohol
- Anlagerungsprodukt von 3 Mol Ethylenoxid an 1 Mol Laurylalkohol,
- Anlagerungsprodukt von 2, 4, 6 oder 15 Mol Ethylenoxid an 1 Mol Nonylalkohol.

Die sauren Ester können je nach dem Säurerest in Form von Mono-, Diester oder Halbester und als freie Säuren oder vorzugsweise als Salze z.B. Alkalimetallsalze oder Ammoniumsalze vorliegen. Als Alkalimetallsalze seien insbesondere die Natrium-, Kalium- oder Lithiumsalze und als Ammoniumsalze die Ammonium-, Dimethylammonium-, Trimethylammonium-, Monoethanolammonium-, Diethanolammonium- und Triethanolammoniumsalze genannt. Vorzugsweise werden die sauren Ester als Ammoniumsalze hergestellt. Mono- oder Diethanolammoniumsalze können noch weiter mit 1 bis 25 Oxoethyleneinheiten verethert sein.

Die sauren Ester werden hergestellt, indem man das erfindungsgemässe Phenylalkylglycidetheranlagerungsprodukt mit einer mindestens zweibasischen Sauerstoffsäure umsetzt und gewünschtenfalls den erhaltenen sauren Ester in die obengenannten Salze überführt.

Als mehrbasische Sauerstoffsäuren für die Bildung der sauren Ester können gegebenenfalls sulfonierte, organische, vorzugsweise aliphatische Dicarbonsäuren von 3 bis 6 Kohlenstoffatomen, wie z.B. Maleinsäure, Malonsäure, Bernsteinsäure oder Sulfobernsteinsäure, oder mehrbasische anorganische Sauerstoffsäuren, wie z.B. Schwefelsäure oder Orthophosphorsäure dienen. Anstelle der Säuren können deren funktionelle Derivate wie Säureanhydride, Säurehalogenide oder Säureamide verwendet werden. Als Beispiele dieser funktionellen Derivate seien Maleinsäureanhydrid, Phosphorpentoxid, Chlorsulfonsäure und Sulfaminsäure genannt. Die Phosphorsäureester entstehen zweckmässigerweise als Gemische eines Mono- und Diesters.

Die Veresterung wird in der Regel durch einfaches Vermischen der Reaktionspartner unter Erwärmen, zweckmässig auf eine Temperatur zwischen 50° und 100°C, durchgeführt. Die zunächst entstehenden, freien Säuren können anschliessend in die entsprechenden Alkalimetall- oder Ammoniumsalze übergeführt werden. Die Ueberführung in die Salze erfolgt auf übliche Weise durch Zugabe von Basen, wie z.B. Ammoniak, Monoethanolamin, Triethanolamin oder Alkalimetallhydroxide, z.B. Natrium- oder Kaliumhydroxid. Gemäss einer besonders bevorzugten Ausführungsart werden saure Schwefelsäureester in Form ihrer Ammoniumsalze direkt hergestellt, indem man die Phenylalkylglycidetheranlagerungsprodukte zweckmässig in Gegenwart von Harnstoff mit Sulfaminsäure erwärmt.

Praktisch wichtige Phenylalkylglycidetheranlagerungsprodukte entsprechen der Formel 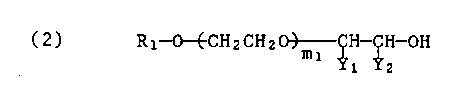 worin
R₁ Alkyl oder Alkenyl je mit 8 bis 22 Kohlenstoffatomen,
von Y₁ und Y₂ eines Benzyloxymethylen oder Phenethyloxymethylen und das andere Wasserstoff und m₁ 4 bis 80 bedeuten.

Bevorzugte, mit einer anorganischen oder organischen Säure hergestellte saure Ester entsprechen der Formel 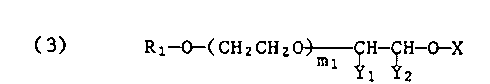
oder der Formel 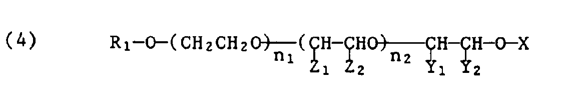
worin R_{1'} Y₁, Y₂ und m₁ die angegebene Bedeutung haben,
von Z₁ und Z₂ eines Methyl und das andere Wasserstoff,
X den Maleinsäure-, Sulfobernsteinsäure-, Schwefelsäure- oder Phosphorsäurerest und die Summe von n₁ + n₂ 4 bis 30, vorzugsweise 6 bis 18 bedeuten.

Besonders bevorzugte saure Ester der Formeln (3) und (4) enthalten entweder eine Maleinsäureestergruppe oder eine Schwefelsäureestergruppe, die vorzugsweise in Form ihrer Alkalimetallsalze oder Ammoniumsalze vorliegen.

Erfindungsgemässe Phenylalkylglycidetheranlagerungsprodukte eignen sich für verschiedene Zwecke in der Textilapplikation, wie z.B. Vorbehandlung, Färben oder Ausrüstung. Nichtionogene unveresterte Produkte finden insbesondere Verwendung als Hilfsmittel beim Färben von wollhaltigen Fasermaterialien mit anionischen Farbstoffen oder Farbstoffgemischen. Die entsprechenden sauren Ester, besonders die Dicarbonsäure-Halbester oder Schwefelsäureester hingegen werden haupsächlich als Netzmittel und Schaumdämpfungsmittel für wässrige Systeme, insbesondere beim Färben von natürlichem oder synthetischem Fasermaterial und in erster Linie beim Färben von Cellulose-Textilmaterialien, Polyesterfasern oder natürlichen oder synthetischen Polyamidfasermaterialien verwendet. Sowohl als nichtionogene Produkte als auch als saure Ester verbessern erfindungsgemässe Phenylalkylglycidetheranlagerungsprodukte in den beschriebenen Formulierungen das Aufziehvermögen der Farbstoffe und beschleunigen dadurch die Diffusion der Farbstoffe in den Fasern.

Gegenstand der vorliegenden Erfindung ist demnach auch ein Verfahren zum Veredeln von natürlichem oder synthetischem Fasermaterial mit oder ohne entsprechende Farbstoffe, wobei die Veredelung in Gegenwart der erfindungsgemässen Phenylalkylglycidetheranlagerungsprodukte durchgeführt wird.

Die Einsatzmengen, in denen die erfindungsgemässen Phenylalkylglycidetheranlagerungsprodukte den Veredelungsflotten, wie z.B. Färbeflotten oder Vor- oder Nachbehandlungsflotten zugesetztwerden, bewegen sich, je nach Substrat, zweckmässigerweise zwischen 0,5 bis 20 g, vorzugsweise 1 bis 10 g, pro Liter Flotte.

Vorteilhafte Anwendungsformen der erfindungsgemässen Phenylalkylglycidetheranlagerungsprodukte bestehen darin, dass diese als nichtionogene und/oder anionische Produkte mit oder ohne Wasser in Kombination mit nichtionogenen oder anionischen Dispergatoren, Fettalkoholen, Fettsäureamiden, Alkylenbisfettsäureamiden, Alkenyldicarbonsäurealkylester, Metallstearaten, Siliconölen, z.B. Dialkylpolysiloxanen, oder auch Mineralölen oder Alkanolaminen in stabilen, netzwirkenden und/oder schaumdämpfenden Formulierungen eingesetzt werden. Derartige Zubereitungen zeichnen sich zudem dadurch aus, dass sie fähig sind, wässrige Systeme praktisch vollkommen zu entlüften. Es können somit sowohl in den Applikationsbädern als auch in den Substraten Lufteinschlüsse vermieden werden. Durch eine solche Entlüftung können Fleckenbildung bei Färbungen und Ausrüstungen ausgeschlossen werden.

Bevorzugt sind wässerige oderwasserfreie Zubereitungen, welche, bezogen auf die gesamte Zubereitung, (A) 2 bis 50 Gew.-% eines sauren Esters des Anlagerungsproduktes gemäß Anspruch 1, (B) 5 bis 50 Gew.-% eines nichtionogenen Tensides, vorzugsweise eines aliphatischen Monoalkohols mit 6 bis 22 Kohlenstoffatomen oder eines Anlagerungsproduktes von 2 bis 80 Mol Ethylenoxid an 1 Mol eines aliphatischen Monoalkohols mit6 bis 22 Kohlenstoffatomen odereines Polyoxyethylenderivates eines Sorbitanfettsäureesters oder eines Phenylalkylglycidetheranlagerungsproduktes der Formel (2) oder Gemische davon und mindestens eine der folgenden Komponenten enthalten: (C) 1 bis 30 Gew.-% eines Silikonöls z.B. eines Dialkylpolysiloxans wie Dimethylpolysiloxan, (D) 10 bis 60 Gew.-% eines Mineralöls z.B. Paraffinöl wie Shell Oil L 6189 oder Mineralöle Esso 301-312, (E) 20 bis 45 Gew.-% eines Dialkylesters einer ethylenisch ungesättigten aliphatischen Dicarbonsäure, z.B. Maleinsäure-bis-2-ethylhexylester, Citracon-bis-2-ethyihexyiester, (F) 10 bis 70 Gew.-% eines Diffusionsbeschleunigers, insbesondere eines aliphatischen oder aromatischen Carbonsäureesters wie Milchsäurealkylester, Benzoesäurealkylester, Benzoesäurephenylester oder Benzoesäurebenzylester, oder auch eines Alkylbenzols, wie Trimethylbenzol oder Ethylbenzol, (G) 0,5 bis 5 Gew.-% eines Salzes einer C1O-C24-Fettsäure und eines mehrwertigen Metalles, wie z.B. Magnesiumdistearat, Calciumdibehenat oder Aluminiumtristearat und (H) 0,5 bis 3 Gew.-% eines C₁-C₄-Alkylendiamids einer Fettsäure mit 10 bis 24 Kohlenstoffatomen, wie z.B. Methylen-bis-stearinsäureamid, Ethylen-bis-stearinsäureamid und Ethylen-bis-behensäureamid.

In den folgenden Herstellungs- und Anwendungsbeispielen beziehen sich die Prozentsätze, wenn nicht anders angegeben ist, auf das Gewicht; Teile sind Gewichtsteile. Die Mengen beziehen sich bei den Farbstoffen auf handelsübliche, d.h. coupierte Ware und bei den Hilfsmitteln auf die Reinsubstanz.

### Herstellungsbeispiele

### Beispiel 1:

120 g des Anlagerungsproduktes von 6 Mol Ethylenoxid an 1 Mol Isononylalkohol (OH-Zahl = 140) werden mit 2,4 g Natriumhydroxid vermischt und nach Zugabe von 49,2 g Benzylglycidether auf 95-100°C erwärmt. Anschliessend wird 1 Stunde bei 100°C und sodann 2 Stunden bei 120°C gerührt.
Man erhält ein gelbliches, klares Produkt der Formel 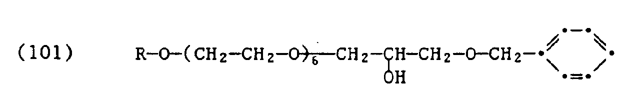
R = Isononylrest
(OH-Zahl = 108).

### Beispiel 2:

66,3 g eines Anlagerungsproduktes von 4 Mol Ethylenoxid an 1 Mol C₉-C₁₁-Oxoalkohol (OH-Zahl = 169) werden bei 50°C mit 0,3 g Bortrifluorid-Etherat versetzt. Dann tropft man in 30 Minuten 32,8 g Benzylglycidether zu, wobei die Temperatur auf 84°C steigt. Man rührt 15 Minuten bei 80°C. Das der Formel (102) entsprechende Reaktionsprodukt ist dünnflüssig und klar. 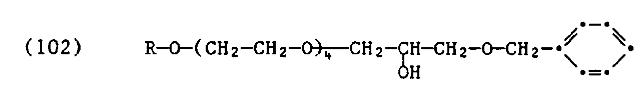
R = C₉-C₁₁-Oxoalkoholrest
(OH-Zahl = 118).

### Beispiel 3:

71 g des gemäss Beispiel 2 erhaltenen Umsetzungsproduktes werden mit 14,7 g Maleinsäureanhydrid (0,15 Mol) und 0,9 g Tri-n-butylamin auf 70°C erwärmt, anschliessend 1 h bei 70°C gerührt, sodann auf 90°C erwärmt und 4 Stunden bei 90°C gerührt. Man erhält ein braungefärbtes, mittelviskoses Produkt. S-Zahl = 100 (Theorie: 98)

### Beispiel 4:

410 g eines Anlagerungsproduktes von 36 Mol Ethylenoxid an 1 Mol C16-C18-Fettalkohol (OH-Zahl = 32) werden bei 70°C geschmolzen und dann mit4,1 g Bortrifiuorid-Etheratversetzt. Dann tropft man in 30 Minuten 38,4 g Benzylglycidether zu, wobei die Temperatur auf 81°C steigt. Man rührt 1 h bei 80°C. Das der Formel (103) entsprechende Reaktionsprodukt ist bei Raumtemperatur wachsartig fest. 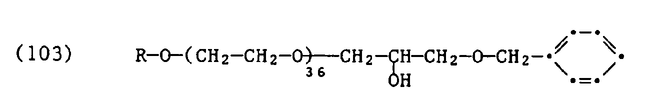
R ⁼ C16-C18-Fettalkoholrest
(OH-Zahl = 29,5).

### Beispiel 5:

96,6 g eines Anlagerungsproduktes von 8 Mol Ethylenoxid an 1 Mol C₉-C₁₁-Oxoalkohol (OH-Zahl = 116) werden bei 50°C mit 0,5 g Bortrifluorid-Etherat versetzt. Dann tropft man in 30 Minuten 32,8 g Benzylglycidether zu, wobei die Temperatur auf 86°C steigt. Man rührt 15 Minuten bei 80°C. Das der Formel (104) entsprechende Reaktionsprodukt ist dünnflüssig und leicht trüb. 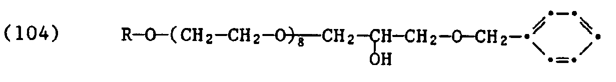
R = C₉-C₁₁-Oxoalkoholrest
(OH-Zahl = 112).

### Beispiel 6:

88,9 g eines Anlagerungsproduktes aus 4 Mol Ethylenoxid an 1 Mol C₉-C₁₁-Oxoalkohol (OH-Zahl = 160) werden bei 50°C mit 0,44 g Bortrifluorid-Etherat versetzt. Dann tropft man in 35 Minuten 42,8 g Phenethylglycidether zu, wobei die Temperatur auf 71°C ansteigt. Man rührt 50 Minuten bei 80°C. Das der Formel (105) entsprechende Reaktionsprodukt ist dünnflüssig und klar. 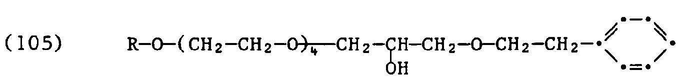
R = C₉-C₁₁-Oxoalkoholrest
(OH-Zahl = 110).

### Anwendungsbeispiel

### Beispiel 7:

100 Teile eines Polyestergewebes werden in eine 60°C warme Färbeflotte gegeben, die 1300 Teile Wasser, 2 g/I Ammoniumsulfat, 2,5 Teile eines Farbstoffes der Formel 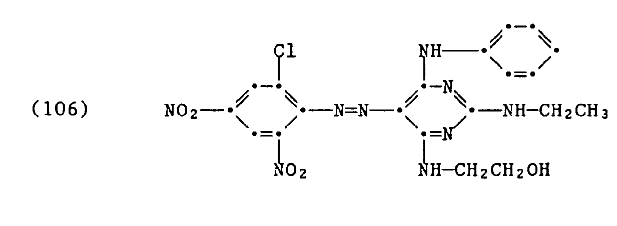
und 2 Teile einer Hilfsmittelformulierung bestehend aus
16 Teilen des gemäss Beispiel 3 hergestellten Maleinsäurehalbesters
24 Teilen des Anlagerungsproduktes von 18 Mol Ethylenoxid an 1 Mol eines C₁₂-Cₗg-Fettalkoholgemisches und
60 Teilen Benzoesäurebenzylester
enthält und mit Ameisensäure auf pH 5 eingestellt ist. Man erhöht die Temperatur der Flotte im Verlauf von 30 Minuten auf 130°C und färbt 60 Minuten bei dieser Temperatur.

Danach wird die Flotte auf 70°C abgekühlt, abgelassen und die Ware gespült. Man erhält ohne die übliche reduktive Nachreinigung eine egale und reibechte rote Färbung mit einer hohen Farbstoffausbeute.

Die in diesem Beispiel verwendete Hilfsmittelformulierung wird wie folgt hergestellt:
In einem heizbaren Rührgefäss werden 60 Teile Benzoesäurebenzylester auf 60°C unter ständigem Rühren erwärmt und anschliessend 24 Teile des Anlagerungsproduktes von 18 Mol Ethylenoxid an 1 Mol eines C₁₂-C₁g-Fettalkoholgemisches und 16 Teile des gemäss Beispiel 3 hergestellten Maleinsäurehalbesters eingerührt. Man erhält nach Abkühlen auf Raumtemperatur eine lagerstabile Formulierung, die insbesondere dazu geeignet ist, beim Färben von Polyesterfasern eingesetzt zu werden.

## Patentansprüche

1. Anlagerungsprodukte einer stöchiometrischen Menge eines Phenylalkylglycidethers an Polyalkylenglykolether der Formel 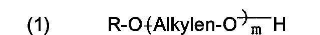
ihre saure Ester und deren Salze, worin
Phenylalkylglycidether Benzylglycidether oder Phenethylglycidether bedeuten,
R einen aliphatischen Rest mit mindestens 4 Kohlenstoffatomen bedeutet, "Alkylen" für einen Alkylenrest von 2 oder 3 Kohlenstoffatomen steht und m eine Zahl von 2 bis 100 ist.

2. Phenylalkylglycidetheranlagerungsprodukte gemäss Anspruch 1, dadurch gekennzeichnet, dass in Formel (1)
R einen Alkyl- oder Alkenylrest von 8 bis 22 Kohlenstoffatomen bedeutet.

3. Phenylalkylglycidetheranlagerungsprodukte gemäss einem der Ansprüche 1 und 2, dadurch gekennzeichnet, dass in Formel (1)
"Alkylen" Ethylen bedeutet.

4. Phenylalkylglycidetheranlagerungsprodukte gemäss einem derAnsprüche 1 bis 3, dadurch gekennzeichnet, dass in Formel (1)
m 4 bis 40 ist.

5. Phenylalkylglycidetheranlagerungsprodukte gemäss Anspruch 1, dadurch gekennzeichnet, dass sie der Formel 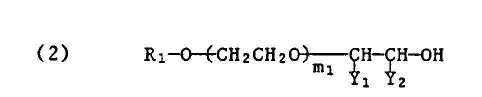 entsprechen, worin
R₁ Alkyl oder Alkenyl je mit 8 bis 22 Kohlenstoffatomen,
von Y₁ und Y₂ eines Benzyloxymethylen oder Phenethyloxymethylen und das andere Wasserstoff und m₁ 4 bis 80 bedeuten.

6. Saure Ester von Phenylalkylglycidetheranlagerungsprodukten gemäss Anspruch 1, dadurch gekennzeichnet, dass sie der Formel 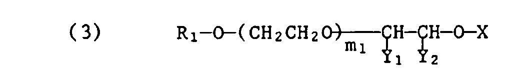 entsprechen, worin
R₁ Alkyl oder Alkenyl je mit 8 bis 22 Kohlenstoffatomen,
von Y₁ und Y₂ eines Benzyloxymethylen oder Phenethyloxymethylen und das andere Wasserstoff,
X den Maleinsäure-, Sulfobernsteinsäure-, Schwefelsäure- oder Phosphorsäurerest und
m₁ 4 bis 80 bedeuten.

7. Saure Ester von Phenylalkylglycidetheranlagerungsprodukten gemäss Anspruch 1, dadurch gekennzeichnet, dass sie der Formel 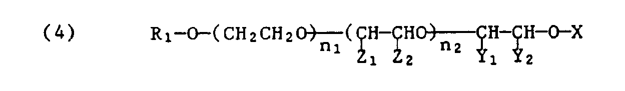 entsprechen, worin
R₁ Alkyl oder Alkenyl je mit 8 bis 22 Kohlenstoffatomen,
von Y₁ und Y₂ eines Benzyloxymethylen oder Phenethyloxymethylen und das andere Wasserstoff,
von Z₁ und Z₂ eines Methyl und das andere Wasserstoff,
X den Maleinsäure-, Sulfobernsteinsäure-, Schwefelsäure- oder Phosphorsäurerest und die Summe von n₁ + n₂ 4 bis 30, vorzugsweise 6 bis 18 bedeuten.

8. Wässerige oder wasserfreie Zubereitung, welche, bezogen auf die gesamte Zubereitung,
(A) 2 bis 50 Gew.-% eines sauren Esters des Anlagerungsproduktes gemäß Ansprüch 1,
(B) 5 bis 50 Gew.-% eines nichtionogenen Tensides und mindestens eine der folgenden Komponenten
(C) 1 bis 30 Gew.-% eines Silikonöls,
(D) 10 bis 60 Gew.-% eines Mineralöls,
(E) 20 bis 45 Gew.-% eines Dialkylesters einer ethylenisch ungesättigten aliphatischen Dicarbonsäure,
(F) 10 bis 70 Gew.-% eines Diffusionsbeschleunigers, insbesondere eines aliphatischen oder aromatischen Carbonsäureesters oder eines Alkylbenzols,
(G) 0,5 bis 5 Gew.-% eines Salzes einer C_{1O}-C₂₄-Fettsäure und eines mehrwertigen Metalls und
(H) 0,5 bis 3 Gew.-% eines C₁-C₄-Alkylendiamids einer Fettsäure mit 10 bis 24 Kohlenstoffatomen enthält.

9. Verwendung der Phenylalkylglycidetheranlagerungsprodukte gemäss einem der Ansprüche 1 bis 7 oder der Zubereitung gemäss Anspruch 8 zum Veredeln von natürlichem oder synthetischem Fasermaterial, insbesondere von natürlichen oder synthetischen Polyamidfasern, Polyesterfasern oder Cellulosefasern mit oder ohne entsprechenden Farbstoffen.

## Claims

1. An addition product of a stoichiometric amount of a phenylalkyl glycidyl ether to a polyalkylene glycol ether of the formula 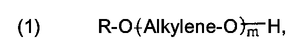 an acid ester or a salt thereof, wherein phenylalkyl glycidyl ether is benzyl glycidyl ether or phenethyl glycidyl ether, R is an aliphatic radical having at least 4 carbon atoms, "Alkylene" is an alkylene radical of 2 or 3 carbon atoms, and m is a number from 2 to 100.

2. A phenylalkyl glycidyl ether addition product according to claim 1, wherein in formula (1) R is an alkyl or alkenyl radical of from 8 to 22 carbon atoms.

3. A phenylalkyl glycidyl ether addition product according to either claim 1 or claim 2, wherein in formula (1) "Alkylene" is ethylene.

4. A phenylalkyl glycidyl ether addition product according to any one of claims 1 to 3, wherein in formula (1) m is 4 to 40.

5. A phenylalkyl glycidyl ether addition product according to claim 1 which corresponds to the formula 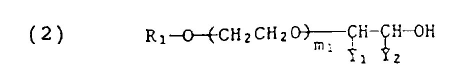 wherein R₁ is alkyl or alkenyl each having from 8 to 22 carbon atoms, one of Y₁ and Y₂ is benzyloxymethy- lene or phenethyloxymethylene and the other is hydrogen, and m₁ is 4 to 80.

6. An acid ester of a phenylalkyl glycidyl ether addition product according to claim 1 which corresponds to the formula 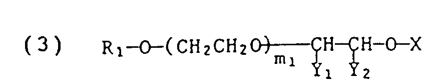 wherein R₁ is alkyl or alkenyl each having from 8 to 22 carbon atoms, one of Y₁ and Y₂ is benzyloxymethy- lene or phenethyloxymethylene and the other is hydrogen, X is the maleic acid, sulfosuccinic acid, sulfuric acid or phosphoric acid radical, and m₁ is 4 to 80.

7. An acid ester of a phenylalkyl glycidyl ether addition product according to claim 1 which corresponds to the formula 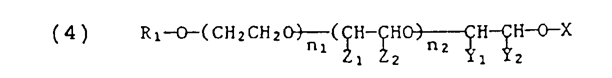 wherein R₁ is alkyl or alkenyl each having from 8 to 22 carbon atoms, one ofY1 and Y₂ is benzyloxymethy- lene or phenethyloxymethylene and the other is hydrogen, one of Z₁ and Z₂ is methyl and the other is hydrogen, X is the maleic acid, sulfosuccinic acid, sulfuric acid or phosphoric acid radical, and the sum of n₁ + n₂ is 4 to 30, preferably 6 to 18.

8. An aqueous or anhydrous preparation that, based on the entire preparation, comprises
(A) from 2 to 50 % by weight of an acid ester of an addition product according to claim 1,
(B) from 5 to 50 % by weight of a non-ionic surfactant and at least one of the following components:
(C) from 1 to 30 % by weight of a silicone oil,
(D) from 10 to 60 % by weight of a mineral oil,
(E) from 20 to 45 % by weight of a dialkyl ester of an ethylenically unsaturated aliphatic dicarboxylic acid,
(F) from 10 to 70 % by weight of a diffusion accelerator, especially an aliphatic or aromatic carboxylic acid ester or an alkylbenzene,
(G) from 0.5 to 5 % by weight of a salt of a Clo-C24fatty acid and a polyvalent metal, and
(H) from 0.5 to 3 % by weight of a C₁-C₄alkylene diamide of a fatty acid having from 10 to 24 carbon atoms.

9. The use of the phenylalkyl glycidyl ether addition product according to any one of claims 1 to 7 or of the preparation according to claim 8 for the finishing of natural or synthetic fibre material, especially natural or synthetic polyamide fibres, polyester fibres or cellulose fibres, with or without appropriate dyes.

## Revendications

1. Produits d'addition d'une quantité stoechiométrique d'un éther phénylalkylique de glycide sur un éther de polyalkylèneglycol de formule : 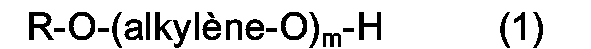
ainsi que leurs esters acides et les sels de ceux-ci, dans lesquels
l'expression "éther phénylalkylique de glycide" désigne l'éther benzylique de glycide ou l'éther phénéthy- lique de glycide,
R représente un reste aliphatique comportant au moins 4 atomes de carbone,
"alkylène" représente un reste alkylène comportant 2 ou 3 atomes de carbone, et
m représente un nombre valant de 2 à 100.

2. Produits d'addition d'éther phénylalkylique de glycide, conformes à la revendication 1, caractérisés en ce que, dans la formule (1), R représente un reste alkyle ou alcényle comportant de 8 à 22 atomes de carbone.

3. Produits d'addition d'éther phénylalkylique de glycide, conformes à l'une des revendications 1 et 2, caractérisés en ce que, dans la formule (1), le terme "alkylène" désigne un groupe éthylène.

4. Produits d'addition d'éther phénylalkylique de glycide, conformes à l'une des revendications 1 à 3, caractérisés en ce que, dans la formule (1), m vaut de 4 à 40.

5. Produits d'addition d'éther phénylalkylique de glycide, conformes à la revendication 1, caractérisé en ce qu'ils correspondent à la formule : 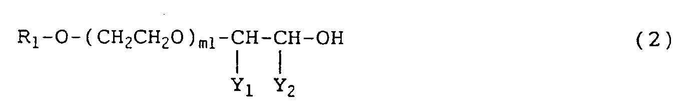
dans laquelle
R₁ représente un groupe alkyle ou alcényle comportant dans chaque cas de 8 à 22 atomes de carbone, l'un des symboles Y₁ et Y₂ représente un groupe benzyloxyméthylène ou phénéthyloxyméthylène, et l'autre représente un atome d'hydrogène, et
m₁ vaut de 4 à 80.

6. Esters acides des produits d'addition d'éther phénylalkylique de glycide conformes à la revendication 1, caractérisés en ce qu'ils correspondent à la formule : 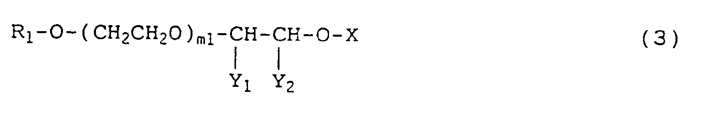
dans laquelle
R₁ représente un groupe alkyle ou alcényle comportant dans chaque cas de 8 à 22 atomes de carbone, l'un des symboles Y₁ et Y₂ représente un groupe benzyloxyméthylène ou phénéthyloxyméthylène, et l'autre représente un atome d'hydrogène,
X représente le reste de l'acide maléique, de l'acide sulfosuccinique, de l'acide sulfurique ou de l'acide phosphorique, et
m₁ vaut de 4 à 80.

7. Esters acides des produits d'addition d'éther phénylalkylique de glycide conformes à la revendication 1, caractérisés en ce qu'ils correspondent à la formule : 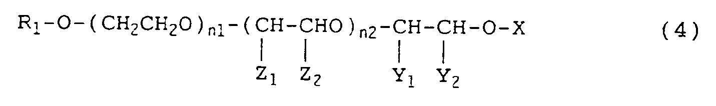
dans laquelle
R₁ représente un groupe alkyle ou alcényle comportant dans chaque cas de 8 à 22 atomes de carbone, l'un des symboles Y₁ et Y₂ représente un groupe benzyloxyméthylène ou phénéthyloxyméthylène, et l'autre représente un atome d'hydrogène,
l'un des symboles Z₁ et Z₂ représente un groupe méthyle et l'autre un atome d'hydrogène,
X représente le reste de l'acide maléique, de l'acide sulfosuccinique, de l'acide sulfurique ou de l'acide phosphorique, et
la somme n₁ + n₂ vaut de 4 à 30, et de préférence de 6 à 18.

8. Formulation aqueuse ou anhydre, qui contient, par rapport à la formulation totale,
(A) de 2 à 50 % en poids d'un ester acide d'un produit d'addition conforme à la revendication 1,
(B) de 5 à 50 % en poids d'un tensioactif non-ionogène, et
au moins l'un des composants suivants :
(C) de 1 à 30 % en poids d'une huile de silicone,
(D) de 10 à 60 % en poids d'une huile minérale,
(E) de 20 à 45 % en poids d'un ester dialkylique d'un acide dicarboxylique aliphatique à insaturation éthylénique,
(F) de 10 à 70 % en poids d'un agent accélérant la diffusion, en particulier d'un ester d'acide carboxylique aliphatique ou aromatique ou d'un alkylbenzène,
(G) de 0,5 à 5 % en poids d'un sel d'un acide gras en C₁₀-C₂₄ et d'un métal polyvalent, et
(H) de 0,5 à 3 % en poids d'un (alkylène en C₁-C₄)-diamide d'un acide gras comportant de 10 à 24 atomes de carbone.

9. Utilisation des produits d'addition d'éther phénylalkylique de glycide, conformes à l'une des revendications 1 à 7, ou de la formulation conforme à la revendication 8, pour l'ennoblissement de matériaux fibreux naturels ou synthétiques, en particulier de fibres de polyamides naturels ou synthétiques, de fibres de polyester ou de fibres de cellulose, avec ou sans colorant approprié.
